(19) Europäisches Patentamt European Patent Office Office européen des brevets

(11) **EP 4 707 585 A1**

(12) **EUROPEAN PATENT APPLICATION**

(43) Date of publication:
**11.03.2026 Bulletin 2026/11**

(21) Application number: **24306457.3**

(22) Date of filing: **05.09.2024**

(51) International Patent Classification (IPC):
*F03D 7/02* (2006.01) *F03D 7/04* (2006.01)

(52) Cooperative Patent Classification (CPC):
**F03D 7/024; F03D 7/0224; F03D 7/046;**
F05B 2270/32; F05B 2270/326; F05B 2270/709

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TotalEnergies OneTech**
**92400 Courbevoie (FR)**

(72) Inventors:
• **DE LATAILLADE, Tristan**
**92400 COURBEVOIE (FR)**
• **CARTON, Florence**
**92400 COURBEVOIE (FR)**
• **CAPALDO, Matteo**
**92400 COURBEVOIE (FR)**

(74) Representative: **Lavoix**
**2, place d'Estienne d'Orves**
**75441 Paris Cedex 09 (FR)**

(54) **INDIVIDUAL PITCH CONTROL METHOD AND ASSOCIATED WIND TURBINE CONTROLLER**

(57) The individual pitch control method (100) comprises an online phase and an offline phase. The online phase comprises acquiring (130) a current value of a parameter corresponding to the wind speed, selecting (140) a current control law and generating (150) a control signal based on the current control law and a current azimuth angle of the blade. The offline phase (110) comprises obtaining a trained reinforcement learning model. Selecting a control law in the online phase consisting in running in inference the trained reinforcement learning model to estimate the current control law from the current value of at least one parameter corresponding to the wind speed.

FIG.2

EP 4 707 585 A1

**Description**

The present invention relates to the technical field of individual pitch control - IPC methods for the individual orientation of each blade of a wind turbine.

Control of wind turbines is needed to ensure safe operation, especially with the recent and gradual increase in rotor diameter leading to more complex dynamic behavior of the structure.

Consequently, applying a control strategy which is more efficient regarding a predefined objective can play a major role in the feasibility and/or profitability of a project, in particular by acting on the performance and/or the lifetime of the wind turbines.

The pitch angle, or pitch, of one blade is defined in a plane transverse to the longitudinal axis of that blade. The pitch angle of one blade corresponds to the instantaneous orientation of that blade around its longitudinal axis.

Among the known pitch control methods, collective pitch control methods allow an adjustment of the pitch of all the blades of the rotor at the same value at the same time. For example, when the wind speed is too high, the collective pitch is increased to reduce the rotation speed of the rotor.

In contrast, individual pitch control - IPC methods allow an adjustment of the pitch angle of each blade individually.

IPC is can be added to wind turbine to reduce load variations at the root of the blade, i.e. in the vicinity of the mechanical coupling of that blade with the hub of the wind turbine.

For example, IPC is presented in the article authored by Cheng Zhang and Franck Plestan, "Individual/collective blade pitch control of floating wind turbine based on adaptive second order sliding mode", in Ocean Engineering, Volume 228, 15 May 2021, or in article authored by H. Namik and K. Stol, "Performance analysis of individual blade pitch control of offshore wind turbines on two floating platforms", in Mechatronics, Volume 21, Issue 4, June 2011, Pages 691-703.

However, the tuning of the control law associated with an IPC method remains a challenge.

The invention therefore aims at providing an IPC method able to overcome this problem.

To this end, the object of the invention is to provide an IPC method, a wind turbine controller and a computer program product according to the appended claims.

The invention and its advantages will be better understood upon reading the description which will follow, provided solely by way of example and with reference made to the accompanying drawings in which:

- Figure 1 is a general schematic representation of a wind turbine of the type allowing an individual pitch control of its blades, this wind turbine being equipped with a controller according to the invention;
- Figure 2 is a schematic representation of a preferred embodiment of the reinforcement learning process to train a model that will allow the controller to select the best control law considering the current wind conditions; and,
- Figure 3 are graphs illustrating results with the invention.

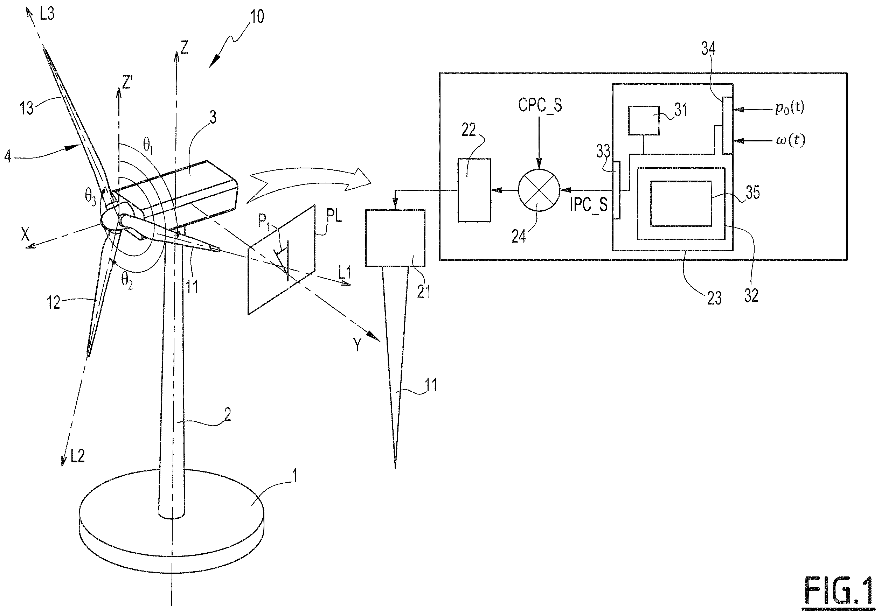

Figure 1 shows a wind turbine 10.

The wind turbine 10 comprises a base 1, a tower 2, a nacelle 3 and a rotor 4 equipped with a plurality of blades, for example three blades 11, 12 and 13.

The tower 2 extend along a tower axis Z. The tower axis Z is preferably substantially vertical.

The rotor 4 is mounted on the nacelle 3 such as to pivot around a rotor axis X. The rotor axis X is perpendicular to the tower axis Z or, preferably, slightly tilted relative to a plane perpendicular to the tower axis Z, with a tilt angle preferably comprised between 0° and 5°.

The axis perpendicular both to the rotor axis X and the tower axis Z is a transverse axis Y.

Each blade extends along a longitudinal axis: blade 11 along axis L1, blade 12 along axis L2 and blade 13 along axis L3.

In the following, the example of the control of the pitch of the first blade 11 will be described with more details, even if the same description could be made for the other two blades.

Upon rotation of the rotor 4, the blades 11, 12, 13 move in a plan of rotation that is perpendicular to the rotor axis X.

In the plane of rotation of the blades 11, 12, 13, the angle between a reference axis Z' and the longitudinal axis of one blade 11, 12, 13 is the azimuth angle of that blade 11, 12, 13. For blade 11, the angle between reference axis Z' and axis L1 is the azimuth angle $\theta_1$.

The reference axis Z' is for example the axis at the intersection of the plane of rotation of the blades 11, 12, 13 and a plane containing the tower axis Z and the rotor axis X.

The wind turbine 10 is configured for individual pitch control of its blades 11, 12, 13.

The pitch ranges from 0, i.e. a neutral orientation of the blade, to a maximum value, for example 90°.

For example, for blade 11, the pitch $p_1$ is defined in plane PL transverse to the axis L1.

At each time, the pitch of one blade is the sum of a collective pitch and an individual pitch.

The collective pitch $p_0$ is common to all the blades 11, 12, 13 of the wind turbine 10.

The individual pitch $\hat{p}_i(t)$ is specific to the $i^{th}$ blade.

For example, the current pitch $p_1(t)$ of blade 11 is the sum of the collective pitch $p_0(t)$ and the individual pitch $\hat{p}_1(t)$ of that blade 11.

As illustrated in the up scaled area of figure 1, to be able to adjust the pitch of each blade individually, the wind turbine 10 is provided with mechanical coupling means 21, for the connection of blade 11 to the rotor 4, actuation means 22 to modify the current pitch $p_1(t)$ of the blade 11, and an individual controller 23 to generate an individual pitch command signal IPC-S to the actuator 22 of blade 11.

Preferably, the turbine 10 is provided with an individual controller for each blade. Alternatively, the turbine 10 is equipped with a common controller capable of controlling each blade from the plurality of blades.

The controller 23 is a computer comprising calculation means, such as a processor 31, storage means, such as a memory 32, input-output interface 33 for the connection to the actuator and input-output interface 34 for the connection to other components of the wind turbine, in particular sensors.

The memory 32 stores computer program instructions, in particular a program 35 whose execution enables the generation of an individual pitch command signal IPC-S to the actuation means of the associated blade.

More specifically, the program 35 takes as entry a current value of at least one parameter that represents the current wind speed.

Preferably, the parameters representing the wind speed are the current rotation speed of the rotor 4, $\omega(t)$, and the current collective pitch, $p_0(t)$, of the blades of the wind turbine 10.

The program 35 computes as output an individual pitch command signal IPC-S corresponding to the individual pitch of the associated blade ($p_1(t)$ in Figure 1). Knowing the current rotation speed $\omega(t)$, the individual pitch command signal IPC-S can be expressed with the current azimuth angle $\theta_1$ rather than time t.

The individual pitch control signal IPC-S is applied to the actuation means 22 as a setpoint. The actuation means implements a regulation process to follow this setpoint, based on error correction for example.

The individual pitch control signal IPC-S is preferably combined, by combiner 24, with other pitch control signal (determined by other common or individual pitch command methods), in particular a common pitch control signal CPC-S based on $p_0(t)$.

According to the invention, the individual pitch angle is modified during the rotation of the blade to optimize, on each turn, at least one quantity relative to the wind turbine 10.

The individual pitch of each blade is thus a function of the azimuth angle of the blade.

This dependency is defined by the current control law CL that is selected by controller 32 according to the current wind speed.

In the present embodiment, the current control law CL is defined in order to minimize, during each turn of the blade about the rotor axis X, a variation of the mechanical load evaluated at a root of said one blade, i.e. in the vicinity of the coupling means connecting the blade to the nacelle 3.

In the preferred embodiment, the selection of the current control law CL is based on a trained reinforcement learning model.

This trained model is obtained offline by way of a Reinforcement Learning - RL process.

Generally speaking, RL process is a powerful algorithmic tool, that can be used for finding strategies to control a specific device, by providing the intended objective (under the form of a reward function) with the appropriate input parameters (defining the state of the device).

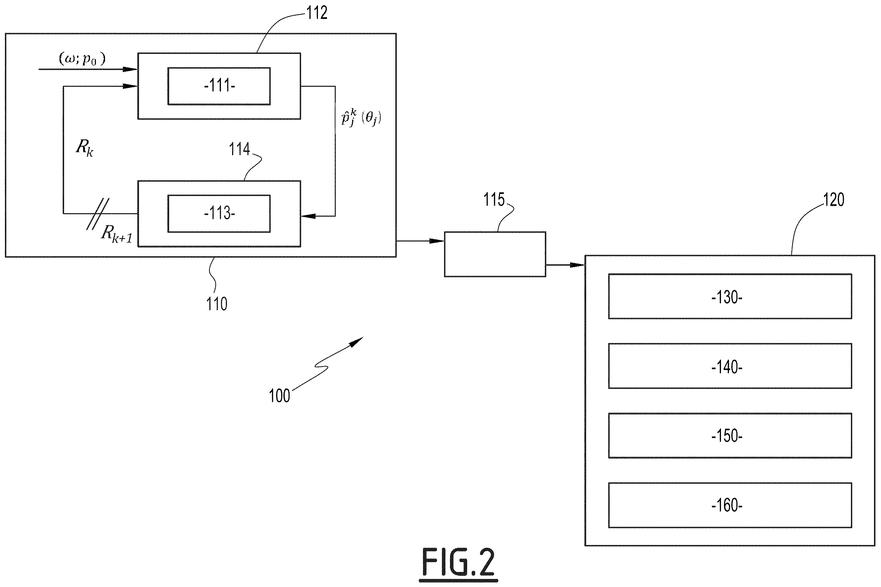

Turning to figure 2, a preferred embodiment of the IPC method 100 according to the invention will now be described.

Method 100 begins with an offline RL process 110. It is an iterative algorithm whose elementary loop involves an agent 112 and an environment 114.

The agent 112 comprises a neural network 111, which is defined by a set of weights at iteration k of the loop (k being an integer).

Based on randomly selected values of the rotation speed $\omega$ and the collective pitch $p_0$ (which are the parameters relative to the wind speed in the preferred embodiment) and a reward $R_k$, the agent 112 estimates an intermediary control law $\widehat{p^k}(\theta)$ for the $k^{th}$ iteration.

The environment 114 comprises a numerical mechanical simulation 113 of the wind turbine 10. It uses the intermediary control law $p^k(\theta)$ and additional inputs equal to the wind speed to compute the reward $R_{k+1}$ for the next iteration.

The neural network 111 is preferably a full connected neural network, for example made up of four layers of 128 nodes each.

The control law is preferably expressed as a periodic function of the azimuth angle $\theta$.

More preferably, the control law expresses the individual pitch $\hat{p}$ as a finite sum of cosine functions, each cosine function being characterized by rank, the cosine function of rank n being defined by an amplitude and a phase, the phase being the sum of n times the azimuth angle of the blade plus a reference phase:

$$\hat{p}(\theta) = a_1 \cos(\theta + \phi_1) + a_2 \cos(2 \cdot \theta + \phi_2) + \cdots + a_n \cos(n \cdot \theta + \phi_n) + \cdots$$
$$+ a_N \cos(N \cdot \theta + \phi_N)$$

This sum is truncated to limit its total number of terms to N. Good results are obtained even with N equal to 1. It is not necessary to go beyond N equal to 10, since individual pitch adjustment at this level of precision is not necessary and difficult to reach (reaction time of the actuation and coupling means). N equal to 5 is a good trade off.

The range of the azimuth angle $\theta$, i.e. the definition of one complete rotation of the blade, is preferably $[0,+2\pi]$ rather than $[-\pi,+\pi]$ because the main phenomenon to take into account is when the blade passes in front of the mast, i.e. around $+\pi$. Alternatively, other ranges can be used, for example a wider range like $[-2\pi,+2\pi]$,

Such a cosine decomposition can be employed to fit even complex functions. It adapts well to various load conditions, leading to an improved adaptability.

The numerical mechanical simulation 113 allows a high-fidelity modelling for structural dynamics with the hypothesis of a non-turbulent wind.

The reward $R_{k+1}$ takes into account at least one quantity to be optimized, i.e. in the preferred embodiment the variation of the mechanical load on the blade root during one turn.

Indeed, by minimizing the load variation for each turn, it is expected to reduce the fatigue of components of the wind turbine during all its operative time, in particular the coupling means between the blade and the rotor, and thus to increase the wind turbine's lifetime.

The instantaneous load is computed by the simulation 113 taking into account the pitch of the blade, i.e. the sum of the collective pitch $p_0$ and the value of the individual pitch, as given by the control law $\hat{p}^k(\theta)$.

For example, the reward is the inverse of the square of the difference between the maximum load and the minimum load during one turn.

Alternatively, another quantity is computed by the simulation and optimized with the reward function, such as the blade flapwise moments, the Coleman moment, the tower base moments, etc.

Alternatively, the reward can be defined so as to optimize simultaneously more than one quantity.

The loop of the RL process 110 is iterated leading to a progressive adjustment of the weights of the neural network 111 so as to estimate an intermediary control law which reduces the blade root load variation.

The loop of the RL process 110 is iterated until a convergence criteria is met. For example, the criteria is simply a maximum number of iterations. Alternatively, the criteria is relative to a variation of the intermediary control law at each iteration.

Once this criteria is met, the neural network 111 is the trained model to be used by the controller 23.

Whereas RL process is originally designed to perform well on successive steps, the person skilled in the art will understand that the RL process here implemented to optimize the individual pitch control strategy is a single-step RL process. At each iteration, new values of the wind parameters are randomly given to the agent 112 and a reward is returned to the agent on the intermediary control law selected by the agent for these values.

In step 120 of method 100, once trained, the trained model is downloaded in the memory of the controller 23.

Alternatively, once trained, the trained model is used to build a look-up table.

The attributes of the look-up table are for example the rotation speed and the collective pitch as input attributes and the amplitude $a_n$ and phase $\phi_n$ as output attributes of the control law estimated by the trained model for these specific values.

This is then the look-up table that is downloaded into the memory of the controller 23. Method 100 then continues with an online phase.

In step 130, a current value of at least one parameter corresponding to the wind speed is acquired. Here the current collective pitch and the current rotation speed are acquired. These quantities are transmitted to the controller 23 from suitable sensors or other processing units, for example the controller defining the common pitch.

In step 140, the controller 23 selects the appropriate control law based on the acquired values. This selection step consists in using the trained model in inference to estimate the control law based on the current values of the relevant wind parameters. The appropriate control law is advantageously given by N amplitudes and N phases.

In step 150, the controller 23 generates the IPC signal based on the current control law selected and a current azimuth angle of the blade.

Finally, in step 160, the IPC signal is transmitted to the actuation means to adjust the individual pitch angle of the associated blade.

When the wind conditions change, steps 130 and 140 are iterated to select a new current control law.

The controller may perform the IPC control in an open loop. Such an open loop ensures in particular transparency and explainability of the pitch modification.

For example, the amplitude of variation of the individual pitch is of 3 to 4° during one turn. It is even less when using a simulation which takes into account the flexibility of the blades. The instantaneous individual pitch can be negative so as to decrease the pitch of the blade below the collective pitch, when this latter is not null. The instantaneous individual pitch can be positive so as to increase the pitch of the blade beyond the collective pitch.

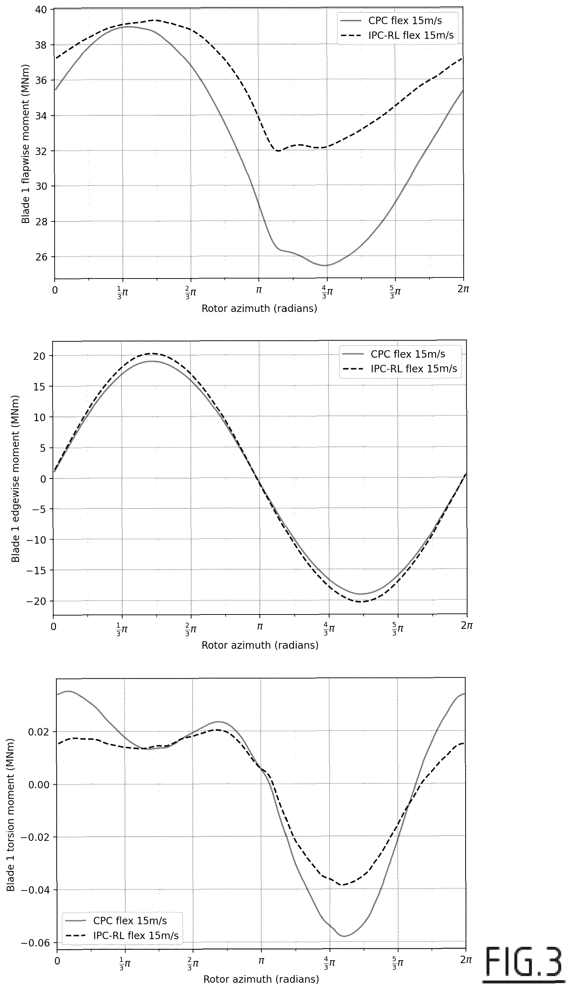

Figure 3 shows three graphs, respectively the evolution of the blade flapwise moment at one blade root during one turn, the blade edgewise moment at the blade root during that turn, and the blade torsional moment at the blade root during that turn, with a collective pitch control law and an individual pitch control law according to the invention, the same IPC law being used on each blade.

The individual pitch control law according to the invention allows a reduction of the variation of the flapwise load, in particular for an azimuth angle comprised between $[0,\pi/4]$ and $[3/4\pi, \pi]$.

When using the IPC law while the turbine is operating below its rated speed, a slight decrease of average generated power and increase in tower base fore-aft moment can be observed. Two solutions are thus possible: the first is to not apply the IPC control below the rated speed, the second is to apply the IPC control but with a limitation factor to reduce the amplitudes of the IPC control for a trade-off between fatigue mitigation and power generation.

The invention enhances the overall performance and stability of the wind turbine.

Blade root load fluctuations in wind turbines can be mitigated with the invention.

The invention is an integrated approach that addresses reduction of load variations while maintaining transparency and efficiency.

RL is a straightforward and adaptable process for optimizing and/or compromising amongst multiple objectives for operating wind turbines.

The person skilled in the art knows that an RL process aims at maximizing the objective (e.g. fatigue mitigation, production optimization, etc.) in an automatic manner, by exploring different actions for different conditions, until convergence to a solution.

The RL process can potentially lead to identifying certain solutions (i.e. suitable control law for the current wind conditions) which would be harder if not impossible to find through a manual or more classical approach.

## Claims

1. An individual pitch control - IPC method (100), implemented by a controller (23) of a wind turbine (10), the wind turbine comprising a rotor with a plurality of blades and actuation means for modifying a pitch angle of each blade individually, the pitch angle of one blade being the sum of a collective pitch ($p_0$), which is common to all the blades, and an individual pitch ($p_j(t)$), which is specific to that one blade, **characterized in that** the IPC method comprising an online phase and an offline phase, the online phase consisting in:

   - acquiring (130) a current value of at least one parameter corresponding to the wind speed;
   - selecting (140) a current control law of the individual pitch of one blade based on said current value of at least one parameter, the current control law optimizing, on each turn of the rotor, at least one quantity of the wind turbine;
   - generating (150) a control signal based on the current control law and a current azimuth angle of said one blade; and,
   - applying (160) the control signal generated to the actuation means to adjust automatically the individual pitch angle of said one blade, and
   the offline phase (110) consisting in obtaining a trained reinforcement learning model through a reinforcement learning process, a loop of the reinforcement learning process involving:
   - an agent (112), comprising the reinforcement learning model (111), defining, based on a value of at least one parameter relative to the wind speed and a reward, an intermediary control law; and,
   - an environment (114), comprising a numerical mechanical simulation (113) of the wind turbine, using the intermediary control law to compute the reward, the reward taking into account the at least one quantity to be optimized,

   the loop being iterated until a convergence criteria is met, selecting a control law in the online phase consisting in running in inference the trained reinforcement learning model to estimate the current control law from the current value of at least one parameter corresponding to the wind speed.

2. The IPC method according to claim 1, wherein the current control law minimizes, during one turn of said one blade, a variation of a mechanical load evaluated at a root of said one blade.

3. The IPC method according to claim 1 or claim 2, wherein the at least one parameter corresponding to the wind speed is a rotation speed of the wind turbine and/or the collective pitch of the blades of the wind turbine.

**4.** The IPC method according to any one of claims 1 to 3, wherein the current control law is expressed as a finite sum of cosine functions, each cosine function being **characterized by** a rank, the cosine function of rank k being defined by an amplitude and a phase, the phase of the cosine function being the sum of k times the azimuth angle of said one blade plus a reference phase.

**5.** The IPC method according to claim 4, wherein the controller is programmed with the trained reinforcement learning model, the trained reinforcement learning model estimating directly the current control law from the current value of the at least one parameter corresponding to the wind speed.

**6.** The IPC method according to claim 4, wherein, the controller is programmed with a look-up table, the look-up table being obtained from the trained reinforcement learning model, the look-up table associating, for each value of a plurality of values of said at least one parameter corresponding to the wind speed, the control law estimated by the trained reinforcement learning model on said value.

**7.** The IPC method according to anyone of claims 1 to 6, wherein the trained reinforcement learning model is a fully connected neural network.

**8.** Wind turbine controller configured for implementing the online phase and/or the offline phase IPC method (100) according to any one of the claims 1 to 7

**9.** A computer program product comprising a computer readable program for causing a controller of a wind turbine of the type allowing pitch control of its blades to realize the online phase and/or a computer to realize the offline phase of the IPC method (100) according to any one of the claims 1 to 7.

FIG.1

**FIG.2**

FIG.3

Europäisches
Patentamt
European
Patent Office
Office européen
des brevets

# EUROPEAN SEARCH REPORT

**Application Number**

EP 24 30 6457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COQUELET MARION ET AL: "A reinforcement-learning approach for individual pitch control", WIND ENERGY, vol. 25, no. 8, 28 April 2022 (2022-04-28), pages 1343-1362, XP093252610, GB ISSN: 1095-4244, DOI: 10.1002/we.2734 Retrieved from the Internet: URL:https://onlinelibrary.wiley.com/doi/full-xml/10.1002/we.2734> * the whole document * | 1-9 | INV. F03D7/02 F03D7/04 |
| X | XIE JINGJIE ET AL: "Power Regulation and Load Mitigation of Floating Wind Turbines via Reinforcement Learning", IEEE TRANSACTIONS ON AUTOMATION SCIENCE AND ENGINEERING, IEEE SERVICE CENTER, NEW YORK, NY, US, vol. 21, no. 3, 1 July 2024 (2024-07-01), pages 4328-4339, XP011978301, ISSN: 1545-5955, DOI: 10.1109/TASE.2023.3295576 [retrieved on 2023-07-21] * the whole document * | 1-9 | |
| X | CN 117 028 147 A (LONGNAN JINFUSHENG NEW ENERGY CO LTD) 10 November 2023 (2023-11-10) * the whole document * | 1-9 | TECHNICAL FIELDS SEARCHED (IPC) F03D |
| A | US 2022/213868 A1 (COLLET DAVID [FR] ET AL) 7 July 2022 (2022-07-07) * the whole document * | 1-9 | |

The present search report has been drawn up for all claims

| Place of search | Date of completion of the search | Examiner |
|---|---|---|
| The Hague | 20 February 2025 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6457

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| CN 117028147 | A | 10-11-2023 | NONE | | |
| US 2022213868 | A1 | 07-07-2022 | CN | 113994087 A | 28-01-2022 |
| | | | EP | 3956559 A1 | 23-02-2022 |
| | | | ES | 2978661 T3 | 17-09-2024 |
| | | | FR | 3095246 A1 | 23-10-2020 |
| | | | PL | 3956559 T3 | 24-06-2024 |
| | | | US | 2022213868 A1 | 07-07-2022 |
| | | | WO | 2020212119 A1 | 22-10-2020 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHENG ZHANG** ; **FRANCK PLESTAN**. Individual/-collective blade pitch control of floating wind turbine based on adaptive second order sliding mode. *Ocean Engineering*, 15 May 2021, vol. 228

- **H. NAMIK** ; **K. STOL**. Performance analysis of individual blade pitch control of offshore wind turbines on two floating platforms. *Mechatronics*, June 2011, vol. 21 (4), 691-703